# EUROPÄISCHE PATENTSCHRIFT

(11) **EP 2 177 990 B1**
(45) Veröffentlichungstag und Bekanntmachung des Hinweises auf die Patenterteilung: **29.03.2017**
(21) Anmeldenummer: 09012913.1
(22) Anmeldetag: 13.10.2009
(51) Int. Cl.: G06F 9/50, G06F 9/46

(54) **Speicherverwaltung in einem portablen Datenträger**
Storage management in a portable data storage medium
Gestion de mémoire dans un support de données portable

(30) Priorität: 14.10.2008 DE 102008051577
(43) Veröffentlichungstag der Anmeldung: 21.04.2010
(73) Patentinhaber: Giesecke & Devrient GmbH, 81677 München (DE)
(72) Erfinder: Kramposthuber, Georg, 80639 München (DE)

(56) Entgegenhaltungen:
- EP-A1- 1 524 597
- EP-A1- 1 760 580
- LAGOSANTO L: "Next-Generation Embedded Java Operating System for Smart Cards" INTERNET CITATION 12. November 2002 (2002-11-12), XP002344945 Gefunden im Internet: URL:http://www.gemplus.com/smart/rd/public ations/pdf/Lag02gdc.pdf> [gefunden am 2005-09-14]

## Beschreibung

Die vorliegende Erfindung betrifft ein Verfahren zum dynamischen Verwalten von Speicherressourcen eines portablen Datenträgers sowie einen Datenträger mit einer derartigen Speicherverwaltung.

Portable Datenträger, z.B. Chipkarten, Mobilfunkkarten oder dergleichen, besitzen bauartbedingt nur geringe volatile Speicherressourcen, wie z.B. einen RAM-Arbeitsspeicher. Gleichzeitig sind derartige Datenträger zumeist mit einem Multithreading-fähigen Betriebssystem ausgestattet, welches prinzipiell das nebenläufige Ausführen von mehreren Prozessen oder "Threads" (so genannte "leichtgewichtige Prozesse") erlaubt, wobei ein Prozess aus mehreren wiederum nebenläufig ausführbaren Threads bestehen kann.

Da es aufgrund der eingeschränkten volatilen Speicherressourcen in der Regel nicht möglich ist, alle nebenläufig auszuführenden Prozesse oder Threads gleichzeitig in dem volatilen Speicher zu halten, besteht das grundsätzliche Problem, den volatilen Speicher unter Beachtung des Laufzeitverhaltens der auszuführenden Prozesse oder Threads optimal zu nutzen.

Die EP 1 297 423 B1 beschreibt ein Verfahren zur Migration von Prozessen von einer ersten Virtuellen Maschine zu einer zweiten Virtuellen Maschine. Dabei werden die Speicherbereiche eines solchen Prozesses durch die erste Virtuelle Maschine in einen persistenten Speicher ausgelagert. Diese Speicherbereiche enthalten Informationen, die den Zustand des Prozesses zu einem Anhaltezeitpunkt wiedergeben. Die zweite Virtuelle Maschine kann diese Speicherbereiche einlesen, so dass der Prozess dort in dem gespeicherten Zustand fortgesetzt werden kann.

In der US 6,687,800 B1 ist eine Chipkarte beschrieben, die über ein Netzwerk, z.B. das Internet, Applikationen von externen Datenbanken nachlädt oder, falls der persistente Speicher der Chipkarte nicht genügend freie Kapazität aufweist, vormals geladene Applikationen wieder in die Datenbanken auslagert. Die EP 0 483 525 A2 beschreibt ein Verfahren zum Auslagern von wenig genutzten Speicherseiten von einem gewöhnlichen RAM-Speicher in einen speziellen, energiesparenden RAM-Speicher zu Energiesparzwecken.

EP 1 524 597 A1 beschreibt ein Verfahren in einem portablen Datenträger (Smart Card), bei dem ein im volatilen Speicher gespeicherter Thread TCB als Ganzes in den persistenten Speicher ausgelagert wird.

Demzufolge ist es die Aufgabe der vorliegenden Erfindung, ein Verfahren zur effektiven Nutzung knapper volatiler Speicherressourcen in einem portablen Datenträger vorzuschlagen.

Diese Aufgabe wird erfindungsgemäß durch ein Verfahren und einen portablen Datenträger mit den Merkmalen der unabhängigen Ansprüche gelöst. Die davon abhängigen Ansprüche beschreiben vorteilhafte Ausgestaltungen und Weiterbildungen der Erfindung.

Die vorliegende Erfindung basiert auf dem Grundgedanken, lediglich bestimmte Objekte eines Threads aus einem volatilen in einen persistenten Speicher des Datenträgers auszulagern, um dadurch volatile Speicherressourcen verfügbar zu machen, ohne dass ausgeführte Threads beeinträchtigt werden.

Ein erfindungsgemäßes Verfahren auf einem portablen Datenträger mit einem Multithreading-fähigen Betriebssystem umfasst die folgenden von einer Speicherverwaltung des Betriebssystems auszuführenden Schritte: Auswählen eines in einem volatilen Speicher des Datenträgers gespeicherten Threads, wobei der ausgewählte Thread zumindest ein Objekt umfasst; Bestimmen zumindest eines auslagerungsfähigen Objekts des ausgewählten Threads; sowie Auslagern lediglich des bestimmten auslagerungsfähigen, zumindest einen Objekts in den persistenten Speicher des Datenträgers.

Entsprechend umfasst ein erfindungsgemäßer Datenträger einen Prozessor, einen volatilen und einen persistenten Speicher, ein Multithreading-fähiges Betriebssystem mit einer Speicherverwaltungseinrichtung und zumindest eine Applikation, die auf dem Prozessor als zumindest ein Thread ausführbar ist. Die Speicherverwaltungseinrichtung ist eingerichtet, einen in dem volatilen Speicher gespeicherten, zumindest ein Objekt umfassenden Thread auszuwählen und zumindest ein auslagerungsfähiges Objekt des Threads zu bestimmen. Weiter ist die Speicherverwaltungseinrichtung eingerichtet, lediglich das bestimmte, zumindest eine auslagerungsfähige Objekt aus dem volatilen Speicher in den persistenten Speicher auszulagern.

Im Zusammenhang mit der vorliegenden Erfindung bezeichnet ein Prozess oder ein Thread jeweils ein ausgeführtes Programm oder einen ausgeführten Programmteil, welches zumindest teilweise in den volatilen Haupt- oder Arbeitsspeicher des Datenträgers geladen wurde und durch den Prozessor des Datenträgers ausgeführt wird. Im Kontext der vorliegenden Erfindung umfasst also ein Prozess einen oder mehrere Threads, die ihrerseits wider ein oder mehrere Objekte umfassen können.

Beim Erzeugen eines oder mehrerer Threads werden von der Speicherverwaltungseinrichtung des Datenträgers verschiedene Speicherbereiche im volatilen Speicher angelegt. Im so genannten "Heap" werden Speicherbereiche dynamisch verwaltet, welche zum Anlegen von Objekten zur Laufzeit des Threads dienen. Dabei ist der Begriff "Objekt" nicht auf Objekte im Sinne der objektorientierten Programmierung, wie z.B. bei Java oder C++, beschränkt. Der Begriff "Objekt" kann vielmehr eine mehr oder weniger funktional zusammenhängende Datenstruktur bezeichnen, z.B. ein Array oder eine sonstige geeignete Datenstruktur im Zusammenhang mit der imperativen oder funktionalen Programmierung, welche während der Ausführung eines Threads angelegt wird und nicht ihre eigenen Methoden wie bei der objektorientierten Programmierung umfasst.

In einem zweiten Speicherbereich des volatilen Speichers wird für jeden Thread je ein eigener Stapelspeicher ("Stack") verwaltet. Dieser mittels der üblichen "push"- und "pop"-Operationen verwaltete Speicherbereich umfasst die Methodenrahmen der Methoden des entsprechenden Threads, in denen z.B. lokale Variablen, Zwischenergebnisse und dergleichen gespeichert sind. Der für die Stapelspeicher benötigte Speicherplatz ist in der Regel bereits bei der Kompilierung der Applikation bekannt und kann durch die Speicherverwaltungseinrichtung gleichfalls dynamisch verwaltet werden.

Abhängig von der konkreten Anwendungssituation des Datenträgers und der vorliegenden Hardwareumgebung kann ein auf dem volatilen Heap gespeichertes Objekt eines Threads als auslagerungsfähig definiert werden. Dabei können vielerlei Parameter betrachtet werden, die beispielsweise die von dem Objekt beanspruchten volatilen Speicherressourcen oder die Laufzeit des Objekts betreffen.

Durch das erfindungsgemäße Auslagern lediglich von bestimmten auslagerungsfähigen Objekten eines Threads anstelle des gesamten Threads, wird eine flexible und effektive Verwaltung der Speicherressourcen des Datenträgers unterhalb der Thread-Ebene ermöglicht. Mittels der beiden Schritte der Auswahl eines Threads und des Bestimmens von auslagerungsfähigen Objekte, kann einerseits der konkreten Speicherauslastungssituation präzise Rechnung getragen werden und anderseits wird eine Beeinträchtigung anderer Threads durch das Auslagern der bestimmten Objekte vermieden.

Vorzugsweise werden als auslagerungsfähige Objekte solche Objekte des ausgewählten Threads bestimmt, die nicht von anderen Threads referenziert werden. Dadurch wird sichergestellt, dass andere Threads nicht in ihrer Ausführung dadurch verzögert werden, dass sie auf ausgelagerte Objekte zugreifen. Alternativ oder zusätzlich kann ein Objekt als auslagerungsfähig betrachtet werden, wenn der von diesem Objekt beanspruchte Speicherplatz eine gewisse Mindestgröße aufweist oder auf das Objekt für eine vorgegebene Zeitspanne nicht mehr zugegriffen wurde.

Es ist auch möglich, zusätzlich zu den bestimmten Objekten auch noch den Stapelspeicher des ausgewählten Threads in den persistenten Speicher auszulagern. Auch dadurch werden freie volatile Speicherressourcen geschaffen, ohne dass die Ausführung anderer Threads beeinträchtigt wird.

Bevorzugt werden die ausgelagerten Daten kompakt, d.h. möglichst in einen zusammenhängenden Speicherbereich im persistenten Speicher ausgelagert. Auf diese Weise wird eine Fragmentierung des persistenten Speichers verhindert. Einer Fragmentierung kann auch dadurch begegnet werden, dass die ausgelagerten Daten möglichst kompakt, vorzugsweise getrennt in Heap- und Stapelspeicherbereich, wieder in den volatilen Speicher eingelagert werden, wenn der ausgewählte Thread von dem Prozessor fortgesetzt wird.

Die Auswahl des Threads, dessen auslagerungsfähige Objekte ausgelagert werden, kann nach verschiedenen Kriterien erfolgen. Gemäß einer bevorzugten Ausführungsform sind den einzelnen Threads Prioritäten zugeordnet, anhand derer die Speicherverwaltung des Betriebssystems den Thread auswählt. Dadurch wird erreicht, dass wichtige Threads, z.B. von Betriebssystemroutinen, aufgrund ihrer hohen Priorität überhaupt nicht ausgewählt werden, während weniger wichtige Threads, deren Verzögerung ein Benutzer des Datenträgers nicht oder kaum wahrnimmt, aufgrund ihrer niedrigen Priorität bevorzugt ausgewählt werden.

Die Priorität gewisser Threads kann von der Speicherverwaltung des Betriebssystems während der Laufzeit der Threads verändert werden. Es können also beispielsweise prioritätshohe Threads, die jedoch aufgrund externer Faktoren blockiert sind - z.B. weil sie auf eine Dateneingabe warten -, temporär in ihrer Priorität herabgesetzt werden. Ein Auslagern eines ohnehin blockierten Threads beeinträchtigt andere Threads in keiner Weise, kann aber zusätzlich volatile Speicherressourcen liefern. Ist die Blockierung des Threads aufgehoben und wird der Thread zur weiteren Ausführung wieder in den volatilen Speicher eingelagert, so kann die Speicherverwaltung die Priorität des Threads wieder erhöhen.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
Im Folgenden wird die Erfindung mit Bezug auf die beiliegenden Zeichnungen beispielhaft erläutert. Darin zeigen:
   - Figur 1: einen erfindungsgemäßen Datenträger; und
   - Figur 2: schematisch das Auslagern von Objekten und eines Stapelspeichers aus einem volatilen Speicher in einen persistenten Speicher des Datenträgers aus Fig. 1.

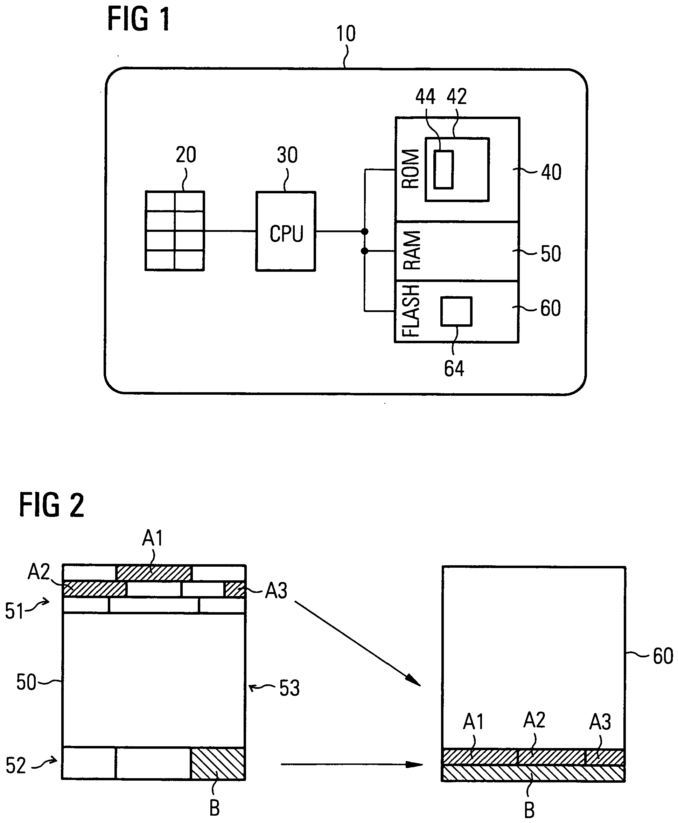

Mit Bezug auf Fig. 1 umfasst ein Datenträger 10, der hier als Chipkarte ausgebildet ist, eine Datenkommunikationsschnittstelle 20, einen Prozessor (CPU) 30 und verschiedene Speicher 40, 50 und 60. Der Datenträger 10 kann auch in anderer Gestalt ausgebildet sein, z.B. als USB-Token.

Die Datenkommunikationsschnittstelle 20 ist als Kontaktfeld gemäß ISO 7816 ausgebildet und dient zur Datenkommunikation mit einer externen Datenverarbeitungseinrichtung (nicht dargestellt), z.B. einem Kartenterminal, sowie zur Energieversorgung des Datenträgers 10. Alternativ oder zusätzlich kann der Datenträger 10 auch über eine eigene Energieversorgung (nicht dargestellt) verfügen, z.B. über eine Batterie. Auch andere kontaktbehaftete Schnittstellen können vorgesehen sein. Alternativ oder zusätzlich kann auch eine Kontaklos-Datenkommunikationsschnittstelle (nicht dargestellt) zur kontaktlosen Datenkommunikation vorgesehen sein, z.B. eine Antenne.

In dem persistenten, nicht wiederbeschreibbaren ROM-Speicher 40 liegt ein Multithreading-fähiges Betriebssystem 42, das den Datenträger 10 steuert. Das Betriebssystem 42 umfasst eine Speicherverwaltungseinrichtung 44 zum Verwalten der Speicherressourcen des Datenträgers 10, insbesondere zum Aus- und Einlagern von Daten aus dem bzw. in den RAM-Speicher 50, der dem Datenträger 10 als volatiler Arbeitsspeicher dient. Mit Bezug auf Fig. 2 wird die Speicherverwaltungseinrichtungen 44 nachfolgend genauer beschrieben.

Alternativ kann das Betriebssystem 42 oder Teile davon, wie z.B. die Speicherverwaltungseinrichtung 44, in dem wiederbeschreibbaren FLASH-Speicher 60, der alternativ auch als EEPROM-Speicher oder dergleichen ausgebildet sein kann, liegen. In dem FLASH-Speicher 60 ist eine Applikation 64 gespeichert, welche auf dem Prozessor 30 als ein Prozess mit mehreren Threads ausführbar ist. Allgemein dient der FLASH-Speicher 60 dem Datenträger 10 zum persistenten Speichern von Daten, die beispielsweise beim Ausführen der Threads von Prozessen anfallen.

Beim Erzeugen und Ausführen des Prozesses zur Applikation 64 teilt die Speicherverwaltungseinrichtung 44 den Threads des Prozesses verschiedene Speicherbereiche im RAM-Speicher 50 zu. Für Objekte, die durch einen Thread dynamisch während deren Laufzeit erzeugt werden, verwaltet die Speicherverwaltungseinrichtung 44 einen Heap im volatilen Speicher 50. Der von dem Heap genutzte Speicherabschnitt 51 ist im oberen Bereich des Speichers 50 in Fig. 2 angedeutet. In den dort gezeigten Speicherbereichen A1, A2, A3 sind Objekte eines ausgewählten Threads abgelegt, die nicht von anderen Threads referenziert werden. In den nicht mit Bezugszeichen versehenen Speicherbereichen im Speicherabschnitt 51 sind entweder Objekte dieses Threads abgelegt, die von anderen Threads referenziert werden, oder Objekte anderer Threads desselben Prozesses und/ oder Objekte von nicht von der Applikation 64 stammenden Threads.

Im Speicherabschnitt 52 verwaltet die Speicherverwaltungseinrichtung 44 Speicherbereiche zum Anlegen der Stapelspeicher für die von dem Prozessor 30 ausgeführten Threads. In dem Speicherbereich B liegt der Stapelspeicher des ausgewählten Threads zu der Applikation 64. Die Speicherabschnitte 51, 52 für den Heap und zum Anlegen von Stapelspeichern sind nicht durch statische Vorgaben beschränkt, d.h. beide können aufgrund der Speicheranforderungen der Threads von der Speicherverwaltungseinrichtung 44 des Betriebssystems 42 dynamisch und somit unter effizienter Ausnutzung des Freispeichers 53 verwaltet werden.

Wegen der begrenzten Größe des volatilen Speichers 50 des Datenträgers 10 kann auch bei der beschriebenen dynamischen Speicherzuteilung durch die Speicherverwaltungseinrichtung 44 der Fall eintreten, dass der Freispeicher 53 nicht mehr für einen Stapelspeicher eines neuen Threads ausreicht. In diesem Fall muss die Speicherverwaltungseinrichtung 44 in dem Speicher 50 gespeicherte Objekte A1, A2, A3 und gegebenenfalls Stapelspeicher B in den persistenten Speicher 60 auslagern, dessen Speicherkapazität in der Regel die des volatilen Speichers 50 deutlich übersteigt.

Dazu wählt die Speicherverwaltungseinrichtung 44 einen in dem Speicher 50 gespeicherten Thread aus, um auslagerungsfähige Objekte A1, A2, A3 des ausgewählten Threads zu bestimmen und in den persistenten Speicher 60 auszulagern. Die Auswahl des Threads erfolgt gemäß einer dem Thread zugeordneten Priorität. Für die Festlegung der Priorität eines Prozesses oder Threads können prinzipiell beliebige Heuristiken herangezogen werden. Insofern können Threads von Betriebssystemroutinen hohe Prioritäten haben, um eine Objektauslagerung bei solchen Threads zu verhindern. Demgegenüber können Threads, deren Verzögerung einem Nutzer des Datenträgers nicht oder kaum auffällt, mit eher niedrigen Prioritäten versehen werden, so dass diese Thread häufiger zu Objektauslagerung ausgewählt werden. Alternativ oder zusätzlich kann sich die Priorität eines Threads beispielsweise auch aus der Größe des von dem Thread eingenommenen Speicherplatzes ergeben. Je größer der eingenommene Speicherplatz ist, desto niedriger ist dann die Priorität. Weiterhin kann die Priorität eines Threads auch davon abhängig sein, wie lange der Thread bereits ruht, also nicht mehr von dem Prozessor ausgeführt wurde. Dadurch kann sich die Priorität eines Threads während seiner Laufzeit ändern.

Eine solche Änderung der Priorität eines Threads wird von der Speicherverwaltungseinrichtung 44 vorgenommen. Z.B. kann die Priorität eines Datenkommunikations-Threads, der auf ein Antwortkommando eines externen Geräts wartet und deshalb blockiert ist, von der Speicherverwaltungseinrichtung 44 für die Dauer der Blockierung in seiner Priorität herabgesetzt werden. Wird das Antwortkommando schließlich empfangen und wird der betreffende Thread wieder aktiv, wird die Priorität des Threads von der Speicherverwaltungseinrichtung 44 wieder erhöht.

Alternativ ist es aber auch möglich, dass zur Auswahl des Threads keine Prioritäten verwendet werden und alle nicht dem Betriebssystem 42 zugehörigen Threads nacheinander von der Speicherverwaltungseinrichtung 44 ausgewählt und auslagerungsfähige Objekte bestimmt werden.

In einem ausgewählten Thread bestimmt die Speicherverwaltungseinrichtung 44 die auslagerungsfähigen Objekte. In der in Fig. 2 gezeigten Ausführungsform liegen die auslagerungsfähigen Objekte des ausgewählten Threads in den Speicherbereichen A1, A2, A3. Diese Objekte werden nicht von anderen Threads referenziert. Derartige auslagerungsfähige Objekte können von der Speicherverwaltung 44 z.B. mittels des im Zusammenhang mit der Garbage Collection bekannten "Mark-and-Sweep"-Verfahrens bestimmt werden. Dabei wird ausgehend von einer Wurzel eines ersten Threads den jeweiligen Objektreferenzen solange gefolgt, bis alle Objekte des ersten Threads markiert sind. Der gleiche Vorgang des Verfolgens von Objektreferenzen wird dann für alle anderen Threads wiederholt. Wird dabei ein Objekt erreicht, welches bereits markiert wurde, so wird diese Markierung gelöscht. Schließlich bilden alle diejenigen Objekte, die nach Ablauf des gesamten Verfahrens markiert sind, gerade die nicht von anderen Threads referenzierten, auslagerungsfähigen Objekte des ersten Threads.

Dieses Verfahren zur Bestimmung der auslagerungsfähigen Objekte eines Threads ist jedoch nur beispielhaft genannt; es können vielmehr beliebige geeignete Verfahren eingesetzt werden, um basierend auf einer vorgegebenen Strategie oder Heuristik auslagerungsfähige Objekte zu bestimmen. So können zur Bestimmung von auslagerungsfähigen Objekten alternativ oder zusätzlich weitere Kriterien herangezogen werden, beispielsweise die Größe des von dem Objekt eingenommenen Speicherbereichs A1, A2, A3, die Häufigkeit, mit der auf das Objekt zugegriffen wird, die Anzahl der Referenzen auf das Objekt bzw. von dem Objekt oder dergleichen.

Die auslagerungsfähigen Objekte A1, A2, A3 des ausgewählten Threads werden in den persistenten Speicher 60 ausgelagert. Zusätzlich zu den bestimmten Objekten wird in der beschriebenen Ausführungsform auch noch der dem Stapelspeicher des ausgewählten Threads zugeordnete Speicherbereich B in den persistenten Speicher 60 ausgelagert.

Die Speicherbereiche A1, A2, A3 der ausgelagerten Objekte und der Stapelspeicherbereich B werden in dem persistenten Speicher 60 in einem zusammenhängenden Speicherbereich kompakt abgelegt, um einer Fragmentierung des Speichers 60 entgegenzuwirken. Die ausgelagerten Speicherbereiche A1, A2, A3, B können in dem Speicher 60 einfach über eine Thread-Identifikation und die Wurzel des Threads identifiziert werden.

Wird ein blockierter ausgewählter Thread wieder aktiv, so werden die ausgelagerten Speicherbereiche A1, A2, A3, B wieder in den Speicher 50 eingelagert. Ist dort nicht genügend Speicherplatz zum direkten Einlagern aller dieser Speicherbereiche vorhanden, so wird zumindest der wichtige Stapelspeicherbereich B in den Speicher 50 eingelagert, um das Laufzeitverhalten des Threads nicht zu sehr zu beeinträchtigen. Abhängig von den Speicheradressen im Speicher 50, an die die einzulagernden Speicherbereiche A1, A2, A3, B wieder in den Speicher 50 geladen werden, werden Objektreferenzen, z.B. Zeiger, an die neuen Speicheradressen angepasst. Dem Problem unterschiedlicher Speicheradressen von Speicherbereichen A1, A2, A3, B vor dem Auslagern und nach dem Einlagern kann auch begegnet werden, indem beim Auslagern die jeweiligen Objektreferenzen als Offset aufgelöst werden und diese beim späteren Einlagern entsprechend angepasst werden.

## Patentansprüche

1. Verfahren auf einem portablen Datenträger (10) mit Multithreadingfähigem Betriebssystem (42), umfassend die von einer Speicherverwaltung (44) des Betriebssystems (42) auszuführenden Schritte:
- Auswählen eines in einem volatilen Speicher (50) des Datenträgers (10) gespeicherten, zumindest ein Objekt umfassenden Threads;
- Bestimmen zumindest eines auslagerungsfähigen Objektes (A1, A2, A3) des Threads;
- Auslagern lediglich des bestimmten zumindest einen Objekts (A1, A2, A3) in einen persistenten Speicher (60) des Datenträgers (10).

2. Verfahren nach Anspruch 1, **dadurch gekennzeichnet, dass** als auslagerungsfähige Objekte (A1, A2, A3) solche Objekte des ausgewählten Threads bestimmt werden, die nicht von anderen Threads referenziert werden.

3. Verfahren nach Anspruch 1 oder 2, **dadurch gekennzeichnet, dass** ein Stapelspeicher (B) des ausgewählten Threads ausgelagert wird.

4. Verfahren nach einem der Ansprüche 1 bis 3, **dadurch gekennzeichnet, dass** auszulagernde Daten (A1, A2, A3; B) kompakt in den persistenten Speicher (60) ausgelagert werden.

5. Verfahren nach einem der Ansprüche 1 bis 4, **dadurch gekennzeichnet, dass** der Thread aufgrund einer dem Thread zugeordneten Priorität ausgewählt wird.

6. Verfahren nach Anspruch 5, **dadurch gekennzeichnet, dass** die Priorität des Threads während seiner Laufzeit geändert wird.

7. Portabler Datenträger (10), umfassend einen Prozessor (30), einen volatilen Speicher (50), einen persistenten Speicher (60), ein Multithreading-fähiges Betriebssystem (42) mit einer Speicherverwaltungseinrichtung (44) und zumindest eine Applikation (64), die auf dem Prozessor (30) als zumindest ein Thread ausführbar ist, wobei die Speicherverwaltungseinrichtung (44) eingerichtet ist, einen in dem volatilen Speicher (50) gespeicherten, zumindest ein Objekt umfassenden Thread auszuwählen, zumindest ein auslagerungsfähiges Objekt (A1, A2, A3) des Threads zu bestimmen und lediglich das bestimmte zumindest eine Objekt (A1, A2, A3) aus dem volatilen Speicher (50) in den persistenten Speicher (60) auszulagern.

8. Datenträger (10) nach Anspruch 7, **dadurch gekennzeichnet, dass** die Speicherverwaltungseinrichtung (44) eingerichtet ist, ein Verfahren gemäß einem der Ansprüche 1 bis 6 durchzuführen.

9. Datenträger (10) nach Anspruch 7 oder 8, **dadurch gekennzeichnet, dass** der Datenträger (10) als Chipkarte, sichere Multimediakarte, Mobilfunkkarte oder USB-Speichermedium ausgebildet ist.

## Claims

1. A method on a portable data carrier (10) with a multithreading-capable operating system (42), comprising the steps to be executed by a memory management (44) of the operating system (42):
- selecting a thread that is stored in a volatile memory (50) of the data carrier (10) and comprises at least one object;
- determining at least one swappable object (A1, A2, A3) of the thread;
- swapping out only the determined at least one object (A1, A2, A3) to a persistent memory (60) of the data carrier (10).

2. The method according to claim 1, **characterized in that** as swappable objects (A1, A2, A3) such objects of the selected thread are determined which are not referenced by other threads.

3. The method according to claim 1 or 2, **characterized in that** a stack memory (B) of the selected thread is swapped out.

4. The method according to any of the claims 1 to 3, **characterized in that** data to be swapped out (A1, A2, A3; B) are compactly swapped out to the persistent memory (60).

5. The method according to any of the claims 1 to 4, **characterized in that** the thread is selected on the basis of a priority assigned to the thread.

6. The method according to claim 5, **characterized in that** the priority of the thread is changed during its runtime.

7. A portable data carrier (10) comprising a processor (30), a volatile memory (50), a persistent memory (60), a multithreading-capable operating system (42) with a memory management device (44) and at least one application (64) that is executable on the processor (30) as at least one thread, wherein the memory management device (44) is adapted to select a thread that is stored in the volatile memory (50) and comprises at least one object, to determine at least one swappable object (A1, A2, A3) of the thread and to swap out only the determined at least one object (A1, A2, A3) from the volatile memory (50) to the persistent memory (60).

8. The data carrier (10) according to claim 7, **characterized in that** the memory management device (44) is adapted to carry out a method according to any of the claims 1 to 6.

9. The data carrier (10) according to claim 7 or 8, **characterized in that** the data carrier (10) is configured as a chip card, secure multimedia card, mobile communication card or USB memory medium.

## Revendications

1. Procédé sur un support de données portable (10) muni d'un système d'exploitation (42) multithread, comprenant les étapes à exécuter par une gestion de mémoire (44) du système d'exploitation (42) :
- sélection d'un thread mémorisé dans une mémoire volatile (50) du support de données (10) et comprenant au moins un objet
- détermination d'au moins un objet (A1, A2, A3) du thread apte à être transféré;
- transfert d'uniquement le au moins un objet (A1, A2, A3) déterminé dans une mémoire persistante (60) du support de données (10).

2. Procédé selon la revendication 1, **caractérisé en ce que**, en tant qu'objets (A1, A2, A3) aptes à être transférés, ce sont des objets du thread sélectionné non référencés par d'autres threads qui sont déterminés.

3. Procédé selon la revendication 1 ou 2, **caractérisé en ce qu'**une mémoire pile (B) du thread sélectionné est transférée.

4. Procédé selon une des revendications de 1 à 3, **caractérisé en ce que** des données à transférer (A1, A2, A3; B) sont transférées de manière compacte dans la mémoire persistante (60) du support de données (10).

5. Procédé selon une des revendications de 1 à 4, **caractérisé en ce que** le thread est sélectionné sur la base d'une priorité affectée au thread.

6. Procédé selon la revendication 5, **caractérisé en ce que** la priorité du thread est modifiée durant son temps d'exécution.

7. Support de données portable (10) comprenant un processeur (30), une mémoire volatile (50), une mémoire persistante (60), un système d'exploitation (42) multithread doté d'un dispositif de gestion de mémoire (44) et au moins une application (64) exécutable sur le processeur (30) en tant qu'au moins un thread, le dispositif de gestion de mémoire (44) étant configuré pour sélectionner un thread mémorisé dans la mémoire volatile (50) et comprenant au moins un objet, pour déterminer au moins un objet (A1, A2, A3) du thread apte à être transféré, et pour transférer uniquement le au moins un objet (A1, A2, A3) déterminé depuis la mémoire volatile (50) vers la mémoire persistante (60).

8. Support de données (10) selon la revendication 7, **caractérisé en ce que** le dispositif de gestion de mémoire (44) est configuré pour exécuter un procédé selon une des revendications de 1 à 6.

9. Support de données (10) selon la revendication 7 ou 8, **caractérisé en ce que** le support de données (10) est réalisé sous forme de carte à puce, de carte de multimédia sécurisée, de carte de téléphonie mobile ou de support mémoire USB.
